# FASCICULE DE BREVET EUROPEEN

(11) **EP 0 793 189 B1**
(45) Date de publication et mention de la délivrance du brevet: **28.04.2004**
(21) Numéro de dépôt: 97200430.3
(22) Date de dépôt: 17.02.1997
(51) Int. Cl.: G06K 7/06, H04B 1/38, H04M 1/02

(54) **Lecteur de carte à puce de formats différents et téléphone portable incorporant un tel lecteur**
Lesegerät für Chipkarten mit verschiedenen Formaten und tragbares Telefon mit einem solchen Lesegerät
Chip card reader for cards with a different format and portable telephone incorporating this reader

(30) Priorité: 28.02.1996 FR 9602490
(43) Date de publication de la demande: 03.09.1997
(73) Titulaire: Koninklijke Philips Electronics N.V., 5621 BA Eindhoven (NL)
(72) Inventeur: De Larminat, Alain, 75008 Paris (FR); Jubert, Laurent, 75008 Paris (FR)
(74) Mandataire: Charpail, François

(56) Documents cités:
- EP-A- 0 476 892
- EP-A- 0 556 970
- WO-A-92/05513
- WO-A-94/27244
- DE-A- 4 138 342

## Description

La présente invention concerne un lecteur de carte électronique destiné à la lecture d'une grande carte ou d'une petite carte ayant la même configuration de contacts mais ayant respectivement un grand et un petit format au moyen d'une pièce d'adaptation, ce lecteur comportant une paroi avec une face support de carte directement accessible et un connecteur dont les doigts de contact à ressort font légèrement saillie au-delà de ladite face support de carte, à travers une ouverture dans ladite paroi.

L'invention concerne aussi un téléphone portable incorporant un tel lecteur.

Dans le domaine du téléphone radio cellulaire portable, notamment le GSM (Global Standard Mobile en anglais), par exemple, il est connu d'utiliser un circuit de mémoire tel qu'une carte électronique qui peut être insérée de façon amovible dans le téléphone. Des données, concernant notamment l'identité de l'utilisateur sont lues à partir de la carte qui a été insérée et utilisées ensuite lors du fonctionnement ultérieur de l'appareil.

La carte électronique peut être, par exemple, une carte dite carte à puce ou "smart-card" en anglais, au format ISO, qui est le format d'une carte de crédit habituelle et qui comporte une mémoire réalisée sous la forme d'un circuit intégré. Ce circuit et ses contacts extérieurs, ou bornes, qui affleurent à la surface de la carte n'occupent en fait, en volume et en surface, qu'une toute petite partie de cette dernière.

Dans les systèmes de télécommunications modernes, les applications liées à l'utilisation de cartes à puce vont croissant. L'une de ces applications concerne le circuit dit, en anglais Subscriber Identity Module (SIM) proposé pour le système de radiotéléphone cellulaire numérique paneuropéen. Voir à ce sujet la recommandation GSM 11.11 de l'ETSI qui décrit les spécifications et les recommandations GSM 02.17 relatives aux caractéristiques fonctionnelles du SIM.

Deux standards mécaniques différents sont proposés pour la carte SIM GSM. Les fonctionnalités sont les mêmes pour les deux tailles mais les dimensions physiques sont différentes sauf l'épaisseur des cartes, égale à 0,8 mm. Ces deux standards sont l'ISO SIM, encore appelée grande carte dans le présente texte, aux dimensions d'une carte de crédit et la Micro SIM, ou petite carte, qui mesure 20 mm x 25 mm. L'ISO SIM est relativement grande et le besoin de cartes plus petites se fait sentir à mesure que la miniaturisation continue à réduire la taille du combiné radiotéléphonique (radiotéléphone) lui-même. La réduction de la carte au format Micro SIM est favorable à cet effort de miniaturisation.

En principe un radiotéléphone est conçu pour recevoir l'une ou l'autre des deux cartes SIM précitées qui seront appelées à coexister. Pour une plus grande souplesse d'utilisation, il est souhaitable de concevoir un radiotéléphone apte à recevoir l'une ou l'autre carte SIM. Ceci peut s'avérer nécessaire lorsqu'on souhaite prêter son radiotéléphone à une personne qui a une carte SIM d'un autre format que celle du propriétaire de l'appareil. Une solution à ce problème technique est connue, notamment du brevet européen No 0 556 970 A1. Le radiotéléphone qui y est décrit comporte un adaptateur qui, lorsque disposé en mode de lecture d'une carte à puce, au format le plus grand, est placé dans une cavité de façon à ne pas faire obstacle au passage de la carte, et qui, lorsque disposé en mode de lecture d'une carte Micro SIM, ou format le plus petit, bascule au moyen d'une liaison à pivot et plaque les bornes de contact de la carte contre les doigts correspondants du lecteur de carte électronique. La liaison à pivot mise en oeuvre présente un inconvénient : lors du basculement de l'adaptateur, celui-ci fait saillie avec le corps de l'appareil et devient alors vulnérable aux chocs. Par ailleurs, cette solution n'est pas favorable à un encombrement réduit, dans le lecteur du radiotéléphone, puisque ce dernier est apte à contenir les deux cartes en même temps, la grande en position de lecture et la petite en position de rangement, les deux étant superposées.

Un but de l'invention est de fournir, dans un lecteur de carte électronique un adaptateur simple pour carte Micro SIM qui n'accroisse pas, dans ce dernier, l'encombrement prévu pour la mise en place d'une carte en format ISO SIM.

Un autre but de l'invention est qu'un adaptateur pour carte Micro SIM soit toujours présent, de façon inamovible dans un lecteur de carte électronique.

Encore un autre but de l'invention est de fournir de façon simple et économique une mise en place précise en position de lecture d'une carte Micro SIM dans un lecteur de carte électronique.

Selon l'invention ces buts sont atteints et les inconvénients de l'art antérieur sont atténués ou supprimés grâce au fait que le lecteur défini dans le paragraphe introductif est remarquable en ce que, pour l'adaptation en position de lecture de ladite carte de petit format, ladite paroi comporte un embrèvement 9 autour de ladite ouverture 8 pour recevoir ladite pièce d'adaptation 7 elle même étant destinée à recevoir ladite carte de petit format à coïncidence de contacts avec les doigts 3 dudit connecteur 2, et en ce que ladite pièce d'adaptation 7 comporte un trou 15 destiné à venir en regard de ladite ouverture 8 lorsque ladite pièce d'adaptation 7 est insérée dans ledit embrèvement.

Pour venir en contact avec la paroi, la pièce d'adaptation peut comporter plusieurs pattes, dont l'extrémité recourbée empêche l'extraction de cette pièce une fois mise en place. Sa réalisation en tôle mince lui permet, en l'absence de la carte Micro SIM, de s'escamoter entièrement dans l'embrèvement (ou cuvette) pratiqué dans la paroi précitée et de ne pas gêner ainsi la mise en place d'une carte ISO SIM.

Par ailleurs, pour un positionnement précis de la carte Micro SIM, on peut prévoir de réaliser la paroi avec son embrèvement par moulage par injection et que ce soient les bords mêmes de l'embrèvement qui guident et maintiennent en position de lecture la petite carte.

La description qui suit, en regard des dessins annexés, le tout donné à titre d'exemple non limitatif fera bien comprendre comment l'invention peut être réalisée.

La figure 1 est une vue en perspective éclatée, avec arrachement, d'un premier mode de réalisation de l'invention.

La figure 2 est une vue de dessus, avec arrachement, du premier mode de réalisation de l'invention.

Les figures 3A, 3B, 3C sont des sections selon la coupe III-III de la figure 2 montrant la mise en place de la petite carte sous la pièce d'adaptation selon l'invention.

Les figures 4 et 5 illustrent, selon les coupes IV-IV et V-V de la figure 2, avec arrachement, le premier mode de réalisation de l'invention.

Les figures 4.1 et 5.1 illustrent, selon les coupes IV-IV et V-V de la figure 2, avec arrachement, un deuxième mode de réalisation de l'invention.

La figure 6 est une partie agrandie de la figure 3C où est représenté un doigt de retenue de la petite carte.

La figure 7 représente un téléphone portable incorporant un lecteur de carte électronique selon l'invention.

Sur les figures les mêmes références représentent les mêmes éléments avec les mêmes fonctions.

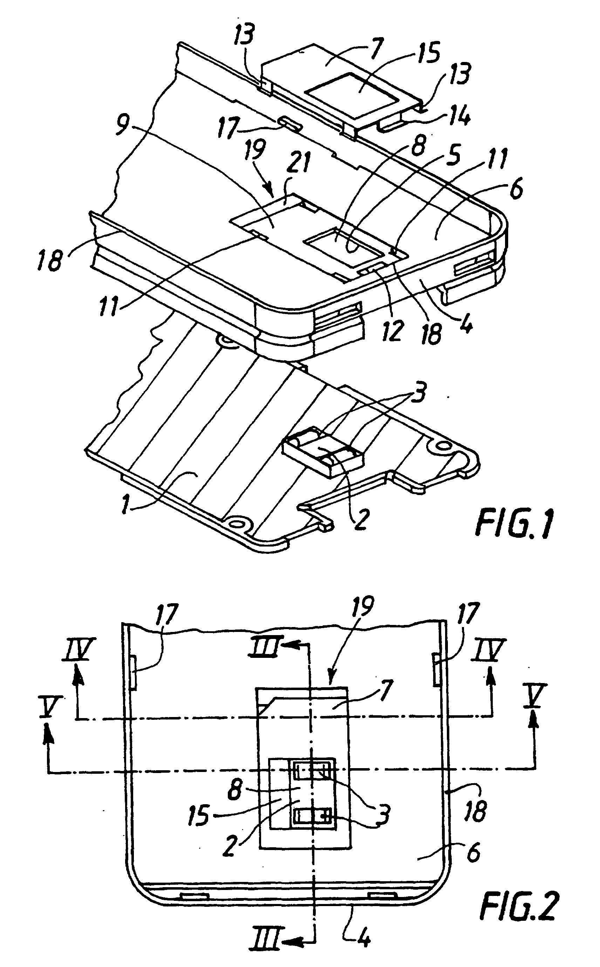

De l'appareil électronique représenté à la figure 1, par exemple un téléphone portable, est seulement illustré un lecteur de carte électronique, destiné à la lecture d'une grande ou d'une petite carte électronique (non représentées). A cet effet, à une carte de circuit imprimé 1 est fixé (entre autres composants non représentés) un connecteur 2 muni de doigts de contact à ressort tels que 3. Un châssis 4 est muni d'une paroi 5 avec une face externe plane 6. Une pièce d'adaptation 7, qui constitue le coeur de l'invention, est destinée à maintenir en position de lecture une petite carte électronique, dite carte Micro SIM lorsque l'appareil est un téléphone portable, la grande carte étant alors une carte dite carte à puce, au format d'une carte de crédit et dénommée ISO SIM ou encore Full SIM. Lorsque la carte 1 de circuit imprimé est montée sur le châssis 4, les doigts de contact 3 font légèrement saillie vers l'extérieur, au-delà de la face 6, à travers une ouverture 8 dans la paroi 5, Selon l'invention, la paroi 5 comporte, à partir de la face 6, un embrèvement 9, en forme de cuvette rectangulaire peu profonde, pratiqué autour de l'ouverture 8, de même format que la petite carte, avec des dimensions latérales légèrement supérieures. Sur le périmètre de l'embrèvement 9, des orifices tels que 11 et 12 sont destinés à recevoir des pattes telles que 13 ou 14 de la pièce d'adaptation 7. De préférence, le châssis 4 est réalisé en matière plastique, par exemple en polycarbonate ou en ABS par moulage par injection, y compris l'embrèvement 9 et les orifices 11 ou 12.

La profondeur de l'embrèvement 9 est de quelques dixièmes de millimètre, typiquement égale à 0,3 mm. La pièce 7 est réalisée en tôle mince, par exemple en acier inoxydable tel que de l'acier nickelé, d'une épaisseur légèrement inférieure à la profondeur de l'embrèvement 9 et typiquement égale à 0,2 mm. La pièce d'adaptation 7 se met en place par enfoncement des pattes 13, 14 dans les orifices correspondants 11, 12, jusqu'à ce que sa face externe soit entièrement logée dans l'embrèvement 9, c'est-à-dire escamotée légèrement en retrait par rapport à la face 6. Un trou 15, pratiqué dans la pièce 7 en regard de l'ouverture 8, laisse le passage aux doigts de contact 3, comme il est visible sur la figure 2.

Dans cette position, tout se passe comme si la pièce d'adaptation 7 était absente et il est possible de glisser une carte ISO SIM (non représentée) sous des ergots 17, contre la face 6 en position de lecture, cette carte étant maintenue calée latéralement par le bord relevé 18 qui l'encadre exactement.

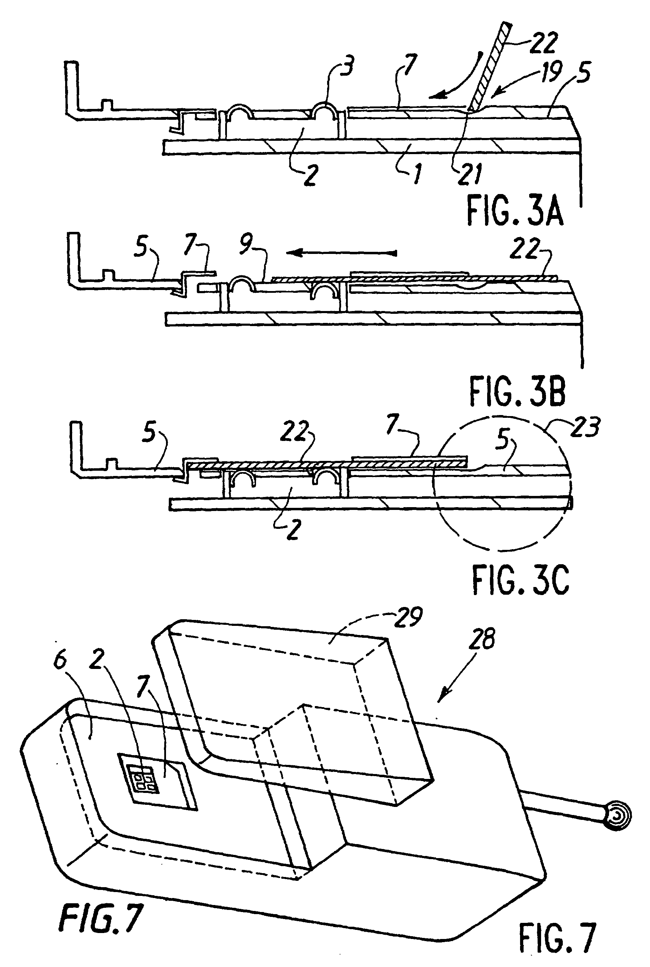

Si l'on veut adapter l'appareil à une petite carte, la carte Micro SIM notamment, il faut s'assurer qu'une grande carte n'est pas présente dans l'appareil, et sinon l'en extraire, puis procéder comme représenté en coupe à la figure 3, en insérant la petite carte dans l'embrèvement 9. On notera que, pour permettre cette manipulation, un côté libre 19 est dégagé, de préférence, sur le périmètre de l'embrèvement 9. En outre la pièce d'adaptation 7 est de préférence fixée à demeure à la paroi 5, étant maintenue en butée par les extrémités recourbées des pattes contre la face interne de la paroi 5, avec un débattement frontal, en direction normale à cette dernière, au moins égal à l'épaisseur de la petite carte, soit 0,8 mm pour une carte Micro SIM.

Pour faciliter l'introduction, respectivement l'extraction de la petite carte, le côté libre 19 peut comporter une saignée 21 qui forme une sape sous le côté libre correspondant de la pièce d'adaptation 7.

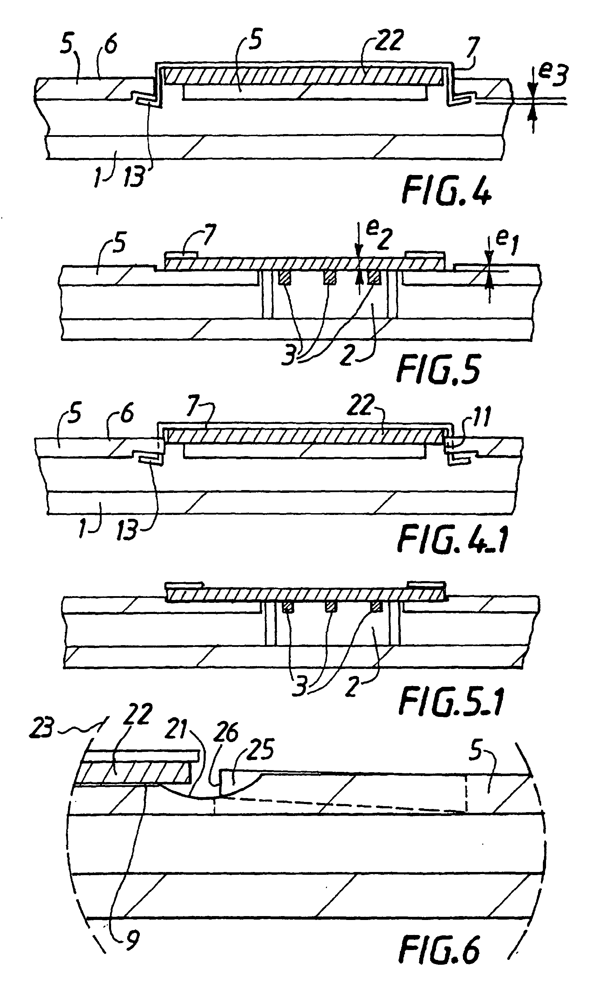

La figure 3A montre le début de l'introduction de la petite carte 22 dont le bord d'engagement en 21 relève le bord correspondant de la pièce 7. A la figure 3B, la carte est partiellement glissée avec un léger biais dans l'embrèvement 9 et à la figure 3C la petite carte est entièrement appliquée contre le fond de l'embrèvement 9, étant maintenue latéralement soit par les pattes 13 et 14, ce qui constitue le premier mode de réalisation des figures 1, 4 et 5, soit par les bords de l'embrèvement, conformément au deuxième mode de réalisation des figures 4.1 et 5.1. Dans la position de la figure 3C, les bornes de contact de la carte 22 appuient avec une pression convenable pour un bon contact électrique contre les doigts du connecteur 2. On notera que cette pression due à l'élasticité des doigts 3 est légèrement plus élevée que pour la grande carte (ISO SIM), étant donné le léger enfoncement de la petite carte dans l'embrèvement 9.

Les figures 4, 5 et 4.1, 5.1 permettent de mieux expliciter les premier et deuxième modes de réalisation de l'invention, selon une coupe en direction perpendiculaire à celle de la figure 3.

Le premier mode des figures 4 et 5 implique une finition soignée de la pièce d'adaptation 7 car c'est l'écartement entre pattes qui détermine le positionnement latéral correct de la petite carte 22, avec des tolérances nécessairement assez faibles. Sur les figure 4 et 5 on peut noter l'épaisseur e1 qui est la profondeur de l'embrèvement, l'épaisseur e2 de la petite carte 22 et le jeu e3 de l'ordre de 0,1 mm qui permet d'insérer et d'extraire la carte sans effort particulier.

Pour le deuxième mode de réalisation des figures 4.1 et 5.1, les orifices 11 ou 12 pour le passage des pattes 13 ou 14 sont pratiqués en saillie, à l'extérieur du périmètre de l'embrèvement et ce sont les bords mêmes de l'embrèvement qui assument la fonction de calage latéral de la petite carte 22. Ce deuxième mode de réalisation est particulièrement avantageux lorsque l'embrèvement est réalisé par moulage par injection de la paroi 5 parce qu'alors, un positionnement relatif précis de l'embrèvement 9 et du connecteur 2 est assez facile à réaliser avec les technologies actuelles, ce qui en retour n'implique par une finition trop soignée de la pièce d'adaptation 7 et en diminue corrélativement le coût.

La figure 6 montre un perfectionnement de l'invention, le mode de représentation choisi étant un agrandissement du cercle en trait interrompu 23 de la figure 3C.

Lorsque la petite carte est en place dans l'embrèvement 9 avec un léger jeu comme indiqué ci-dessus, il faut éviter qu'un choc latéral ne puisse la décaler, au point de la déconnecter électriquement. A cet effet, on peut prévoir un doigt de retenue 25. Ce doigt 25, légèrement élastique à la façon d'un ressort à lame peut être pratiqué dans la paroi 5 elle-même par exemple par moulage par injection. L'extrémité 26 du doigt 25 débouche sur le côté libre de l'embrèvement 9 et sert de butée proche empêchant le recul de la petite carte 22. Pour la mise en place et l'extraction de la petite carte, ce doigt est facilement escamotable, grâce à son élasticité, notamment en dehors de la saignée 21, par enfoncement de son extrémité dans la paroi 5. Avantageusement, la partie inférieure du doigt est amincie à sa face interne, pour ne pas faire saillie hors de la paroi 5, lors de son escamotage.

La figure 7 est une vue schématique en perspective d'un téléphone portable 28 incorporant un lecteur de carte électronique tel que décrit ci-dessus, pour la lecture d'une carte ISO SIM ou d'une carte Micro SIM. Comme représenté, le téléphone portable 28 peut comporter un boîtier amovible 29 contenant par exemple une batterie qui sert à l'alimentation électrique de l'appareil. Le boîtier amovible 29 permet un accès facile au connecteur 2 et, lorsqu'il est solidarisé avec l'appareil, ce boîtier contribue au maintien en place de la carte électronique ISO SIM ou Micro SIM en position de lecture contre la face 6 de la paroi 5.

## Revendications

1. Lecteur de carte électronique destiné à la lecture d'une grande carte ou d'une petite carte (22) ayant la même configuration de contacts mais ayant respectivement un grand et un petit format au moyen d'une pièce d'adaptation (7), ce lecteur comportant une paroi (5) avec une face support de carte (6) directement accessible et un connecteur (2) dont les doigts de contact à ressort (3) font légèrement saillie au-delà de ladite face support de carte (6), à travers une ouverture (8) dans ladite paroi (5), **caractérisé en ce que**, pour l'adaptation en position de lecture de ladite carte de petit format, ladite paroi (5) comporte un embrèvement (9) autour de ladite ouverture (8) pour recevoir, ladite pièce d'adaptation (7) elle même étant destinée à recevoir ladite carte de petit format à coïncidence de contacts avec les doigts (3) dudit connecteur (2), et **en ce que** ladite pièce d'adaptation (7) comporte un trou (15) destiné à venir en regard de ladite ouverture (8) lorsque ladite pièce d'adaptation (7) est insérée dans ledit embrèvement.

2. Lecteur de carte électronique selon la revendication 1 dont ladite paroi (5) est fabriquée par moulage par injection.

3. Lecteur de carte électronique selon la revendication 1 ou 2, **caractérisé en ce que**, pour venir en contact avec ladite paroi (5) ladite pièce d'adaptation (7) comporte au moins deux pattes d'agrafage (13, 14), qui traversent ladite paroi par des orifices (11, 12) prévus à cet effet, un côté libre étant dégagé, sur le périmètre dudit embrèvement, pour l'introduction ou l'extraction de ladite petite carte.

4. Lecteur de carte électronique selon la revendication 3, **caractérisé en ce que** lesdits orifices (11, 12) sont pratiqués à l'extérieur du périmètre dudit embrèvement.

5. Lecteur de carte électronique selon la revendication 3 ou 4, **caractérisé en ce que**, à l'endroit dudit côté libre, le bord de l'embrèvement comporte une saignée (21) d'introduction ou d'extraction de ladite petite carte.

6. Lecteur de carte électronique selon l'une des revendications 1 à 5, **caractérisé en ce qu'**il comporte des moyens de retenue (25) de ladite petite carte dans ledit embrèvement.

7. Lecteur de carte électronique selon la revendication 6, **caractérisé en ce que** lesdits moyens de retenue sont constitués par un doigt élastique pratiqué dans ladite paroi par entaillage de cette dernière et dont l'extrémité disposée sur ledit côté libre de l'embrèvement constitue une butée pour ladite petite carte après sa mise en place.

8. Téléphone portable incorporant un lecteur de carte électronique selon l'une des revendications 1 à 7, pour la lecture d'une grande carte dite ISO SIM ou d'une petite carte dite Micro SIM.

9. Téléphone portable incorporant un lecteur de carte électronique selon l'une des revendications 1 à 7 et comportant un boîtier amovible qui, en position de fonctionnement, est fixé en vis-à-vis du lecteur de carte électronique.

## Claims

1. An electronic card reader for reading a large card or a small card (22) having the same contact configuration but with a large or a small format respectively, by means of an adapter element (7), this reader having a wall (5) with a directly accessible card supporting side (6) and a connector (2) whose resilient contact terminals (3) slightly protrude from said card supporting side (6) through an opening (8) in said wall (5), **characterized in that**, for holding said small card in the reading position, said wall (5) has a recess (9) around said opening (8) for receiving said adapter element (7) itself being intended to receive said small card while the contact pins abut the contact terminals (3) of said connector (2), and **in that** said adapter element (7) has a hole (15) intended to be facing said opening (8) when said adapter element (7) is inserted in said recess.

2. An electronic card reader as claimed in claim 1, whose wall (5) is manufactured by injection molding.

3. An electronic card reader as claimed in claim 1 or 2, **characterized in that**, for the adapter to be integral with said wall (5), the adapter element (7) has at least two retaining lugs (13, 14) which pass through said wall through openings (11, 12) provided for this purpose, a free side being disengaged around the perimeter of said recess for introducing or extracting said small card.

4. An electronic card reader as claimed in claim 3, **characterized in that** said openings (11, 12) are provided on the outside of the perimeter of said recess.

5. An electronic card reader as claimed in claim 3 or 4, **characterized in that** at the location of said free side, the edge of the recess has a depression (21) for introducing or extracting said small card.

6. An electronic card reader as claimed in one of the claims 1 to 5, **characterized in that** it comprises retaining means (25) for retaining said small card in said recess.

7. An electronic card reader as claimed in claim 6, **characterized in that** said retaining means are formed by an elastic member provided in said wall by notching into the latter and whose end situated on said free side of the recess forms a stop for said small card after it has been put in place.

8. A portable telephone incorporating an electronic card reader as claimed in one of the claims 1 to 7 for reading a large ISO SIM card or a small Micro SIM card.

9. A portable telephone incorporating an electronic card reader as claimed in one of the claims 1 to 7 and comprising a removable casing which in the operating position is fixed to the electronic card reader.

## Patentansprüche

1. Elektronisches, in ein tragbares Telefon integriertes Kartenlesegerät zum Lesen einer großen Karte oder einer kleinen Karte (22) mit derselben Klemmenkonfiguration, aber mit jeweils einem großen und einem kleinen Format mittels eine Adapterteil (7), wobei das Lesegerät eine Wand (5) mit einer direkt zugänglichen Kartenaufnahmeseite (6) und einen Anschluss (2) aufweist, dessen federnde Kontaktfinger (3) leicht über die besagte Kartenaufnahmeseite (6) hinausragen, durch eine Öffnung (8) in der besagten Wand (5), **dadurch gekennzeichnet, dass** für die Anpassung der besagten kleinformatigen Karte in Leseposition die besagte Wand (5) eine Vertiefung (9) um die besagte Öffnung (8) aufweist, um das besagte Adapterteil (7) aufzunehmen, welches selbst dafür bestimmt ist, die besagte kleinformatige Karte in übereinstimmenden Kontakt mit den Fingern (3) des besagten Anschlusses (2) zu bringen und dadurch, dass das besagte Adapterteil (7) ein dafür bestimmtes Loch (15) aufweist, gegen die besagte Öffnung (8) zu kommen, wenn das besagte Adapterteil (7) in die besagte Vertiefung eingefügt ist.

2. Elektronisches Kartenlesegerät nach Anspruch 1, dessen besagte Wand im Spritzguss hergestellt wird.

3. Elektronisches Kartenlesegerät nach Anspruch 1 oder 2, **dadurch gekennzeichnet, dass** zur Herstellung des Kontakts mit der besagten Wand (5) das besagte Adapterteil (7) mindestens zwei Verschlussklauen (13, 14) aufweist, die die besagte Wand durch für diesen Zweck vorgesehene Öffnungen (11, 12) durchqueren, wobei für das Eingeben oder das Herausnehmen der Karte ein freies Ende um den Perimeter der besagten Vertiefung eingebracht wird.

4. Elektronisches Kartenlesegerät nach Anspruch 3, **dadurch gekennzeichnet, dass** die besagten Öffnungen (11, 12) außerhalb des Perimeters der besagten Vertiefung eingebracht werden.

5. Elektronisches Kartenlesegerät nach Anspruch 3, oder 4, **dadurch gekennzeichnet, dass** an der Stelle der besagten freien Seite der Rand der Vertiefung einen Spalt (21) zum Eingeben oder Herausnehmen der besagten kleinen Karte aufweist.

6. Elektronisches Kartenlesegerät nach einem der Ansprüche 1 bis 5, **dadurch gekennzeichnet, dass** es Halterungen (25) für die besagte kleine Karte in der besagten Vertiefung enthält.

7. Elektronisches Kartenlesegerät nach Anspruch 6, **dadurch gekennzeichnet, dass** die besagten Halterungen aus elastischen Fingern gebildet werden, die in die besagte Wand durch Einschneiden dieser letzteren sind und von denen das auf der besagten freien Seite der Vertiefung angeordnete Ende einen Anschlag für die besagte Karte bildet, nachdem diese eingeführt wurde.

8. Tragbares Telefon mit einem elektronisches Kartenlesegerät nach einem der Ansprüche 1 bis 7 zum Lesen einer großen, sogenannten SIM-ISO-Karte oder einer kleinen, sogenannten SIM-Mikrokarte.

9. Tragbares Telefon mit einem elektronisches Kartenlesegerät nach einem der Ansprüche 1 bis 7 mit einem abnehmbaren Gehäuse, welches in Betriebsposition gegenüber dem elektronischen Kartenlesegerät befestigt ist.
